(19) Europäisches Patentamt / European Patent Office / Office européen des brevets

(11) **EP 2 387 327 B1**

(12) **EUROPEAN PATENT SPECIFICATION**

(45) Date of publication and mention of the grant of the patent:
**21.03.2018 Bulletin 2018/12**

(21) Application number: **10700415.2**

(22) Date of filing: **15.01.2010**

(51) Int Cl.:
*A21D 8/04* (2006.01)     *A21D 2/18* (2006.01)
*A21D 13/02* (2006.01)    *A21D 13/06* (2017.01)
*A21D 13/062* (2017.01)   *A23L 7/104* (2016.01)
*A23L 7/109* (2016.01)    *A23L 7/10* (2016.01)
*A23L 7/122* (2016.01)    *A23L 7/13* (2016.01)

(86) International application number:
**PCT/EP2010/050446**

(87) International publication number:
**WO 2010/081870 (22.07.2010 Gazette 2010/29)**

(54) **ENZYMATIC GENERATION OF OLIGASACCHARIDES FROM CEREALS OR CEREAL BI-STREAMS**

ENZYMATISCHE ERZEUGUNG VON OLIGASACCHARIDEN AUS GETREIDE ODER GETREIDE-BI-STRÖMEN

GÉNÉRATION ENZYMATIQUE D'OLIGASACCHARIDES À PARTIR DE CÉRÉALES OU BI-FLUX DE CÉRÉALES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **16.01.2009  EP 09150744**
**16.01.2009  US 145366 P**

(43) Date of publication of application:
**23.11.2011  Bulletin 2011/47**

(73) Proprietor: **DuPont Nutrition Biosciences ApS**
**1411 Copenhagen K (DK)**

(72) Inventors:
• **SØRENSEN, Jens Frisbæk**
**DK-8200 Århus N (DK)**
• **MIKKELSEN, René**
**DK-8660 Skanderborg (DK)**
• **POULSEN, Charlotte Horsmans**
**DK-8220 Brabrand (DK)**
• **KRAGH, Karsten Matthias**
**DK-8260 Viby J (DK)**

(74) Representative: **D Young & Co LLP**
**120 Holborn**
**London EC1N 2DY (GB)**

(56) References cited:
**WO-A2-2008/087167     FR-A1- 2 884 390**
**US-A1- 2005 089 602**

• **K. KATINA, M. SALMENKALLIO-MARTTILA, R. PARTANEN, P. FORSSELL, K. AUTIO: "Effects of sourdough and enzymes on staling of high-fibre wheat bread" LEBENSMITTEL WISSENSCHAFT UND TECHNOLOGIE, no. 39, 2006, pages 479-491, XP024953891 London, GB**
• **LAURIKAINEN T ET AL: "Effects of enzymes in fibre-enriched baking" JOURNAL OF THE SCIENCE OF FOOD AND AGRICULTURE, WILEY & SONS, CHICHESTER, GB, vol. 76, 1 January 1998 (1998-01-01), pages 239-249, XP002443665 ISSN: 0022-5142**
• **DATABASE EPODOC EUROPEAN PATENT OFFICE, THE HAGUE, NL; 31 July 1996 (1996-07-31), VANGELOV ANGEL: "BREAD IMPROVER" XP002529203 & BG 99 355 A (VANGELOV [BG]) 31 July 1996 (1996-07-31)**

• ANONYMOUS: 'BRENDA- Amyloglucosidase' BRENDA- THE COMPREHENSIVE ENZYME INFORMATION SYSTEM, [Online] 01 January 2016, pages 1 - 1, XP055251624 Retrieved from the Internet: <URL:http://www.brenda-enzymes.info/search_ result.php?quicksearch=1&noOfResults=10&a= 9 &W[2]=amyloglucosidase&T[2]=2&V[8]=1> [retrieved on 2016-02-19]

• PECIULYTE AUSRA ET AL: "Morphology and enzyme production ofTrichoderma reeseiRut C-30 are affected by the physical and structural characteristics of cellulosic substrates", FUNGAL GENETICS AND BIOLOGY, SAN DIEGO, CA, US, vol. 72, 2 August 2014 (2014-08-02), pages 64-72, XP029085000, ISSN: 1087-1845, DOI: 10.1016/J.FGB.2014.07.011

**Description**

FIELD OF THE INVENTION

The present invention relates to the solubilisation of cereal bran, for preparing compositions comprising soluble fractions of cereal bran and the use of these compositions comprising solubilised cereal bran for the preparation of food products, such as bread.

BACKGROUND OF THE INVENTION

Cereals contain 5-10% of arabinoxylan, which together with starch, cellulose and $\beta$- glucan constitute the most abundant cereal carbohydrates. Arabinoxylan comprises a main chain of $\beta$-1,4-linked D-xylopyranosyl units to which O-2 and/or O-3 a-L-arabino-furanosyl units are linked or 4-O-methyl glucuronic acid residues or the xylopyranosyl units can be esterified with acetic acid. Furthermore, the L-arabinofuranosyl side chain residues can be esterified with ferulic and p-coumaric acid. In a typical arabinoxylan, unsubstituted, monosubstituted and disubstituted xylose residues occur.

Arabinoxylans in cereals are either water-extractable or water- unextractable. Water-unextractable arabinoxylans may be partially solubilised under alkaline conditions or by using enzymes, such as endoxylanases.

Arabinoxylan-oligosaccharides (AXOS), are oligosaccharides derived from arabinoxylan and have been shown to exert prebiotic properties. Prebiotics are compounds, usually non-glucosidic oligosaccharides, that can not be digested by enzymes of the upper gastro-intestinal tract but are fermented selectively by some types of intestinal bacteria in the large intestine. The presence of prebiotics in the diet causes a shift in the composition of the intestinal bacterial population, typically characterised by a relative increase in Lactobacillus and Bifidobacterium species. This shift in the microbiota of the intestine is associated with improved overall health, reduced gut infections, increased levels of intestinal short chain fatty acids, better absorption of minerals, and suppression of colon cancer initiation.

Katapodis P et al, European journal of Nutrition, 2003 Jan; 42(1):55-60 relates to the enzymic production of a feruloylated oligosaccharide with antioxidant activity from wheat flour arabinoxylan.

Yuan et al, Food Chemistry, Vol 95, Issue 3, 2006, Pages 484-492 relates to the production of feruloyl oligosaccharides from wheat bran insoluble dietary fibre by xylanases from *Bacillus subtilis.*

It has recently been shown by e.g. Courtin et. al Journal of the science of food and agriculture. 88. p 2517-2522 (2008) and by Cloetens et al, Journal of the American College of Nutrition, Vol. 27, No. 4, 512-518 (2008), that the solubilised bran has a better nutritional effect than the insoluble bran in chickens.

Swennen et al. Journal of the science of food and agriculture, 2006, vol. 86, 1722-1731, relates to Large-scale production and characterisation of wheat bran arabinoxylooligosaccharides.

WO2008000050 relates to methods for making soluble arabinoxylans as coproduct of fermentation of whole-grain cereals.

WO 2008087167 relates to methods for increasing the level of water-soluble arabinoxylan oligosaccharides in situ in baked products.

Rouau, X and Surget, A., Carbohydrate polymers 24: 123 - 132 (1994), describes a rapid semi-automated method for the determination of total and water-extractable pentosan in wheat flours.

Katina et al., (2006) LWT - Food Science and Technology, Vol, 39; 5, 479-491 studied the effects of sourdough and enzymes ($\alpha$-amylase, xylanase and lipase) on the specific volume, staling and microstructure of wheat pan bread supplemented with wheat bran.

Laurikainen et al., (1998) J Sci Food Agric 76, 239-249 studied the suitability of different enzymes in fibre-enriched baking and their effects on dietary fibre content and ratio of insoluble to soluble fibre content of the breads.

FR2884390 describes the use of alpha-amylase and hemicellulose in the production of bread comprising bran.

US 2005/0089602 describes a process for the wet fractionation of cereal bran including enzymatic treatment, wet milling and fractionation.

Vangelov Angel (1996-07-31) describes an improver designed for bread making comprising wheat bran, malt flour and a combination of amylase and xylanase.

There is a need in the art for better utilisation of the cereal, wherein less of the cereals will go to low price applications like cattle feed. Furthermore, it is a long felt need to be able to utilise the bran fraction from cereals in traditionally, already existing cereal products, without significant impact on the product appearance/structure, the color or the taste, and to make it possible to increase the health and nutritional effect of already exisiting products.

OBJECT OF THE INVENTION

It is an object of the invention to provide methods for increased solubilisation of cereal bran, to provide methods for better utilisation of the cereal, wherein less of the cereals will go to low price applications, such as cattle feed. It is furthermore an object of the present invention, to provide suitable methods enabling the utilisation of bran fractions from cereals in traditionally, already existing cereal products, without significant impact on the product appearance/structure, the color or the taste, and to make it possible to increase the health and nutritional effect of already exisiting products.

SUMMARY OF THE INVENTION

It has been found by the inventors of the present invention that by keeping a substantial amount of starch in the cereal bran when treating with cell-wall modifying enzymes and starch modifying enzymes, a significant higher yield of arabinoxylan oligosaccharides as well as total soluble material may be obtained in the process for solubilisation of cereal starch.

In a broad aspect the present invention relates to solubilisation of cereal bran which may be used to produce a composition comprising at least one part of the cereal bran that is solubilised. It is to be understood that another part of the composition may be completely or partly insoluble fractions of bran.

So, in a first aspect the present invention relates to a method for the solubilisation of a cereal bran comprising starch, said method comprising the steps of:

a) preparing a liquid suspension of particulate cereal bran containing starch, wherein less than 30% (w/w) of the liquid suspension of particulate cereal bran is starch or components containing starch, such as flour, and wherein the cereal bran contains at least 3% of the starch normally present in the cereal after traditional mechanical processing of the cereal, such as after commercially milling of the cereal;

b) treating said particulate cereal bran in liquid suspension sequentially in any order without the removal of any components or simultaneously with: a xylanase and a cellulase; one or more starch modifying enzyme(s) selected from the group consisting of an alpha-amylase, a pullulanase, isoamylase and a beta-amylase; and a transglucosidase having an activity defined as EC 2.4.1.24;

and wherein the solubilised cereal bran is further treated to inactivate further enzyme activity.

We describe herein solubilised cereal bran produced by the methods of the invention.

In a further aspect the present invention relates to the use of solubilised cereal bran produced by methods according to the invention, for the production of a food product.

We describe herein a food product obtained by use of solubilised cereal bran produced by methods according to the invention in the production of the food product.

We describe herein a kit of parts comprising

a) a combination of enzymes comprising: one or more cell-wall modifying enzyme; one or more starch modifying enzyme, and optionally and optionally one or more further enzyme;

b) instructions for use in a method according to the invention; and

c) Optionally other ingredients for a food product.

LEGENDS TO THE FIGURE

Fig. 1 Recovery of extraction buffer as a function of bran treatment. The columns represent the extract volume recovered for trial numbers 1-6 according to table 3.

Fig. 2. Dry matter in soluble fraction obtained as a function of bran treatment. The columns represent the dry matter content in % for trial numbers 1-6 according to table 3.

Fig. 3. Solubilisation degree of bran as a function of bran treatment. The columns represent the the degree of bran solubilisation for trial numbers 1-6 according to table 3.

Fig 4. Corrected (for extraction volume recovery) solubilisation degree of bran as a function of bran treatment. The columns represent the solubilisation degree of bran in % (corrected for extraction volume recovery) for trial numbers 1-6 according to table 3.

Fig 5. Baking trial results. Relative volume of breads versus blank (%). Columns represent bread volume in % of baking trial 1-4 according to table 9. Trial 1 (blank is set to 100%).

Fig. 6 Breads obtained from baking with (from the left) control flour, 2,5% soluble fiber, 5% soluble fiber and 5% insoluble fiber.

Fig. 7. Breads obtained from baking with (from the left) control flour, 2,5% soluble fiber, 5% soluble fiber and 5% insoluble fiber.

DETAILED DISCLOSURE OF THE INVENTION

The present invention is as defined by the appended claims and relates to a process of solubilisation of cereal sidestreams (bran) generating a product that may be utilised in cereal applications. The present invention will allow utilisation of the cereal sidestream in cereal applications without having adverse effect on the sensoric and textural properties of the resulting products, and it would increase the utilisation of the raw materials (the cereals). There will in the processes according to the invention be a generation of prebiotic oligosaccharides, such as beta-glucan, and AXOS, tocophenols, and tocotriols, the latter two having an antioxidative effect. There is further believed to be a generation of mono- and di-glycerides, lyso-PC and mono/di-galactosyl-mono-glycerides, all having an emulsifier effect, which will have a further positive effect on the appearance, structure and stability of a final cereal product.

In some embodiments the solubilsed product obtained by the process according to the invention will comprise compounds selected from pre-biotics, antioxidants and emulsifiers.

In some embodiments the solubilsed product obtained by the process according to the invention will comprise arabinoxylan oligosaccharides (AXOS).

In some embodiments the solubilsed product obtained by the process according to the invention will comprise isomaltooligosaccharide (IMO)

In some embodiments the cereal bran used in the methods of the invention is from cereal bi-streams, such as e.g. wheat bran from traditional milling.

Traditional wheat milling is done to an extraction degree (% flour yield based on Kernel weight) of 65-85%, yielding wheat bran consisting of cell-wall polysaccharides such as arabinoxylan, beta-glucan, cellulose, furthermore, protein, lipids, lignin and starch will be present in the bran. Treating cereal bran with a combination of a) one or more cell-wall hydrolysing activity, such as from xylanases, beta-glucanases, cellulases and b) one or more starch hydrolysing enzymes such as alpha-amylases, pullulanases, beta-amylase and transglucosylation enzymes e.g. trans-glycosidase, will generate AXOS and in some embodiments also IMO, together with other cell-wall oligo-/polysaccharides. The technology may be applied to milling side streams generating a prebiotic and low carb dietary fiber product, which may be applied into cereal applications like baking, breakfast cereals, cakes, pasta, etc..

One important feature of the present invention may be a more acceptable sensoric appearance and health impacts of the final products. Using the bran fraction according to the present invention in cereal applications will mainly influence four different parameters: 1) Product structure/appearance, 2) Product color, 3) Product taste, and/or 4) Health aspects.

1) Adding the bran fraction into a cereal product will influence the structure of the final product. If the product is a yeast raised bread, the bran fraction will have a detrimental effect on the gluten strength, giving a more compact product with a smaller volume. In general, bran addition to the product will influence the product structure and appearance. This might be eliminated, or reduced if the bran fraction or fibre fraction was added to the product in a soluble form instead of the solid form. The solublised bran will e.g. not have the same effect on the gluten development and strength in yeast raised bread.

2) Using bran in cereal products have a significant influence on the product color - the product gets darker. The reason for this is color components in the bran fraction (mainly phenolic compounds in the cell-wall) which will influence the overall product color. A feature that most often is seen as a drawback and less appealing product, compared to the more white products produced from the endosperm (flour) alone. Using the solubilised bran according the present invention, the color may be reduced or even eliminated. The reason for this is that many of the phenolic compounds often are located in the regions of the cell-wall, which is most difficult to access, enzymatically, hence they will not be solubilised and contribute to dark color of the final product produced using the solubilised bran fractions.

The methods according to the present invention may be optimized to completely remove the compounds contributing to coloring, either using specific enzymatic hydrolysis of these products or by application of a separation- and/or purification technology.

3) The same components that contribute to a darker product, when applying the bran fraction, will also change the sensoric properties of the final product. Characteristic for these compounds are a more bitter taste compared to products produced from the endosperm. This taste is well known and favoured in Scandinavia and the northern parts of Europa, where ryebread have traditionally been consumed. However, for many other parts of the world, the taste is not favoured and more seen as a drawback for the product.

4) A lot of focus has been directed to the impact on gut health via our diet. It is well recognised that our diet and especially our consumption of dietary fiber (soluble and insoluble), has a huge impact on the composition of the gut flora and hereby the overall health of the individual. Applying soluble bran, or more precisely, soluble low molecular oligosaccharides of arabinoxylan (AXOS) have been shown to dramatically change the gut flora. By combining the generation of AXOS and IMO's the use of the fiber fraction will not add more starch to the product, elevating the metabolisable energi, but convert the residual starch and glucose into another prebiotic fiber, IMO.

The fraction generated can be utilised in breakfast cereals, increasing the utilisation rate of the cereals (wheat), reducing the bulking agent used (sugar), reducing the calorie load and introducing pre-biotics into the diet.

To summarize, the methods according to the present invention will give a better utilisation of the cereal, less of the cereals will go to low price applications like feed, such as cattle feed. Furthermore, the methods described herein will make it possible to utilise the bran fraction from cereals in traditionally, already existing cereal products, without significant impact on the product appearance/structure, the color or the taste. Finally, the methods described herein will make it possible to increase the health and nutritional effect of already exisiting products.

*Definitions*

The term, "cereal" as used herein refers to the fruits from a plant of the family Poaceae, such seed containing at least the bran comprising the aleurone, and the starchy endosperm, with or without the additional presence of pericarp, seed coat (alternatively called testa) and/or germ. The term includes, but is not limited to species such as wheat, barley, oat, spelt, rye, sorghum, maize, and rice.

The terms "bran" as used herein refers to a cereal-derived milling fraction enriched in any or all of the tissues to be selected from aleurone, pericarp and seed coat, as compared to the corresponding intact seed.

The term "solubilisation" as used herein refers to the solubilisation of cereal bran in the methods according to the invention and is intended to include any degree of solubilisation. Accordingly the "solubilisation" may be to obtain 100 % soluble material or it may be to obtain a solubilisation degree less than 100%, such as less than 70%, such as in the range of 40%-60% or such as in the range of 20%-40%. The solubilisation degree is determined on drymatter versus drymatter bran.

The term "milling fraction", as used herein, refers to all or part of the fractions resulting from mechanical reduction of the size of grains, through, as examples but not limited to, cutting, rolling, crushing, breakage or milling, with or without fractionation, through, as examples but not limited to, sieving, screening, sifting, blowing, aspirating, centrifugal sifting, windsifting, electrostatic separation, or electric field separation.

In the context of the present disclosure, "substantial amounts of starch", refers to a cereal bran that contain about the amount of residual starch normally present after traditional mechanical processing of the cereal, such as after commercially milling of the cereal. At least 3%, such as at least 5%, such as at least 10%, such as at least 20%, such as at least 30%, such as at least 40%, such as at least 50% of the starch normally present in the cereal is still in the cereal bran fraction used according to the present invention. Preferably, the cereal bran has not been pre-treated with starch hydrolysing enzymes or in other ways enzymatically treated to remove starch from the bran.

It is to be understood that the method according to the invention concerns the preparation of a substantially isolated liquid suspension of particulate cereal bran containing residual starch, and an enzymatic treatment of this cereal bran. Accordingly, it is to be understood that the enzymes are to have an enzymatic effect on the cereal bran with its residual starch. The present invention is not intended to cover the enzymatic treatment of compositions with additional added flour preparations, such as in situ enzymatic bread making applications.

Less than 30%, such as less than 20%, such as less than 10%, such as less than 6%, such as less than 3%, such as less than 1% (w/w) of the liquid suspension of particulate cereal bran is starch or components containing starch, such as flour.

In the context of the present disclosure, "cell-wall modifying enzyme", refers to any enzyme capable of hydrolysing or modifying the complex matrix polysaccharides of the plant cell wall, such as any enzyme that will have activity in the "cell wall solubilisation assay" included herein. Included within this definition of "cell-wall modifying enzyme" are cellulases, such as cellobiohydrolase I and cellobiohydrolase II, endo-glucanases and beta-glucosidases, and hemicellulolytic enzymes, such as xylanases.

The terms "cellulases" or "cellulolytic enzymes" as used herein are understood as comprising the cellobiohydrolases (EC 3.2.1.91), e.g., cellobiohydrolase I and cellobiohydrolase II, as well as the endo-glucanases (EC 3.2.1.4) and beta-glucosidases (EC 3.2.1.21).

Included with the definition of cellulases are: endoglucanases (EC 3.2.1.4) that cut the cellulose chains at random; cellobiohydrolases (EC 3.2.1.91) which cleave cellobiosyl units from the cellulose chain ends and beta-glucosidases (EC 3.2.1.21) that convert cellobiose and soluble cellodextrins into glucose. Among these three categories of enzymes involved in the biodegradation of cellulose, cellobiohydrolases are the key enzymes for the degradation of native crystalline cellulose. The term "cellobiohydrolase I" is defined herein as a cellulose 1,4-beta-cellobiosidase (also referred to as exo-glucanase, exo-cellobiohydrolase or 1,4-beta-cellobiohydralase) activity, as defined in the enzyme class EC 3.2.1.91, which catalyzes the hydrolysis of 1,4-beta-D-glucosidic linkages in cellulose and cellotetraose, by the release of cellobiose from the non-reducing ends of the chains. The definition of the term "cellobiohydrolase II activity" is identical, except that cellobiohydrolase II attacks from the reducing ends of the chains.

The cellulases may comprise a carbohydrate-binding module (CBM) which enhances the binding of the enzyme to a cellulose-containing fiber and increases the efficacy of the catalytic active part of the enzyme. A CBM is defined as contiguous amino acid sequence within a carbohydrate-active enzyme with a discreet fold having carbohydrate-binding activity. For further information of CBMs see the CAZy internet server (Supra) or Tomme et al. (1995) in Enzymatic Degradation of Insoluble Polysaccharides (Saddler and Penner, eds.), Cellulose-binding domains: classification and properties, pp. 142-163, American Chemical Society, Washington. In a preferred embodiment the cellulases may be a cellulolytic preparation as defined in U.S. application no. 60/941,251. The cellulolytic preparation comprising a polypeptide having cellulolytic enhancing activity (GH61A) may be the one disclosed in WO 2005/074656. The cell-wall modifying enzyme may further be a beta-glucosidase, such as a beta-glucosidase derived from a strain of the genus Trichoderma, Aspergillus or Penicillium, including the fusion protein having beta-glucosidase activity disclosed in U.S. application no. 60/832,511 (Novozymes). A cell-wall modifying enzyme is a CBH II, such as Thielavia terrestris cellobiohydrolase II (CEL6A). A cell-wall modifying enzyme may be a cellulase enzyme, such as one derived from Trichoderma reesei.

Cellulolytic activity may be derived from a fungal source, such as a strain of the genus Trichoderma, such as a strain of Trichoderma reesei; or a strain of the genus Humicola, such as a strain of Humicola insolens.

A cell-wall modifying enzyme may be a polypeptide having cellulolytic enhancing activity (GH61) disclosed in WO 2005/074656; a cellobiohydrolase, such as Thielavia terrestris cellobiohydrolase II (CEL6A), a beta-glucosidase (e.g., the fusion protein disclosed in U.S. application no. 60/832,511) and cellulolytic enzymes, e.g., derived from Trichoderma reesei.

A cell-wall modifying enzyme may be a polypeptide having cellulolytic enhancing activity (GH61A) disclosed in WO 2005/074656; a beta-glucosidase (e.g., the fusion protein disclosed in U.S. application no. 60/832,511) and cellulolytic enzymes, e.g., derived from Trichoderma reesei. A cell-wall modifying enzyme is a commercially available product, such as GC220 available from Genencor, A Danisco Division, US or CELLUCLAST® 1.5L or CELLUZYME™ available from Novozymes A/S, Denmark.

Endoglucanases (EC No. 3.2.1.4) catalyses endo hydrolysis of 1,4-beta-D-glycosidic linkages in cellulose, cellulose derivatives (such as carboxy methyl cellulose and hydroxy ethyl cellulose), lichenin, beta-1,4 bonds in mixed beta-1,3 glucans such as cereal beta-D-glucans or xyloglucans and other plant material containing cellulosic parts. The authorized name is endo- 1,4-beta-D-glucan 4-glucano hydrolase, but the abbreviated term endoglucanase is used in the present specification. Endoglucanase activity may be determined using carboxymethyl cellulose (CMC) hydrolysis according to the procedure of Ghose, 1987, Pure and Appl. Chem. 59: 257-268.

In some embodiments endoglucanases may be derived from a strain of the genus Trichoderma, such as a strain of Trichoderma reesei; a strain of the genus Humicola, such as a strain of Humicola insolens; or a strain of Chrysosporium, preferably a strain of Chrysosporium lucknowense.

The term "cellobiohydrolase" means a 1,4-beta-D-glucan cellobiohydrolase (E.C. 3.2.1.91), which catalyzes the hydrolysis of 1,4-beta-D-glucosidic linkages in cellulose, cellooligosaccharides, or any beta-1,4-linked glucose containing polymer, releasing cellobiose from the reducing or non-reducing ends of the chain.

Examples of cellobiohydroloses are mentioned above including CBH I and CBH II from Trichoderma reseei; Humicola insolens and CBH II from Thielavia tenrestris cellobiohydrolase (CELL6A)

Cellobiohydrolase activity may be determined according to the procedures described by Lever et al., 1972, Anal. Biochem. 47: 273-279 and by van Tilbeurgh et al., 1982, FEBS Letters 149: 152-156; van Tilbeurgh and Claeyssens, 1985, FEBS Letters 187: 283-288. The Lever et al. method is suitable for assessing hydrolysis of cellulose in corn stover and the method of van Tilbeurgh et al., is suitable for determining the cellobiohydrolase activity on a fluorescent disaccharide derivative.

The term "beta-glucosidase" means a beta-D-glucoside glucohydrolase (E.C. 3.2.1.21), which catalyzes the hydrolysis of terminal non-reducing beta-D-glucose residues with the release of beta-D-glucose. For purposes of the present disclosure, beta-glucosidase activity is determined according to the basic procedure described by Venturi et al., 2002, J. Basic Microbiol. 42: 55-66, except different conditions were employed as described herein. One unit of beta-glucosidase activity is defined as 1.0 μmole of p-nitrophenol produced per minute at 500C, pH 5 from 4 mM p-nitrophenyl-beta-D-glucopyranoside as substrate in 100 mM sodium citrate, 0.01% TWEEN® 20.

In some embodiments the beta-glucosidase is of fungal origin, such as a strain of the genus Trichoderma, Aspergillus or Penicillium. In some embodiments the beta-glucosidase is a derived from Trichoderma reesei, such as the beta-glucosidase encoded by the bgl1 gene (see EP 562003). In another embodiment the beta-glucosidase is derived from Aspergillus oryzae (recombinantly produced in Aspergillus oryzae according to WO 02/095014), Aspergillus fumigatus (recombinantly produced in Aspergillus oryzae according to Example 22 of WO 02/095014) or Aspergillus niger (1981, J. Appl. 3: 157-163).

The terms "hemicellulolvtic enzymes" or "hemicellulases", as used herein, refers to enzymes that may break down hemicellulose.

Any hemicellulase suitable for use in hydrolyzing hemicellulose, preferably into arabinoxylan oligosaccharides, may be used. Preferred hemicellulases include xylanases, arabinofuranosidases, acetyl xylan esterase, feruloyl esterase, glucuronidases, galactanase, endo-galactanase, mannases, endo or exo arabinases, exo-galactanses, pectinase, xyloglucanase, or mixtures of two or more thereof. An example of hemicellulase suitable for use in the present invention includes Grindamyl Powerbake 930 (available from Danisco A/S, Denmark) or VISCOZYM E™ (available from Novozymes A/S, Denmark). In an embodiment the xylanase is of microbial origin, such as of fungal origin (e.g., Trichoderma, Meripilus, Humicola, Aspergillus, Fusarium) or from a bacterium (e.g., Bacillus). In some embodiments the xylanase is derived from a filamentous fungus, preferably derived from a strain of Aspergillus, such as Aspergillus aculeatus; or a strain of Humicola, preferably Humicola lanuginosa. The xylanase may preferably be an endo-1,4-beta-xylanase, more preferably an endo-1,4-beta-xylanase of GH 10 or GH11. Examples of commercial xylanases include Grindamyl H121 or Grindamyl Powerbake 930 from Danisco A/S, Denmark or SHEARZYME™ and BIOFEED WHEAT™ from Novozymes A/S, Denmark.

Arabinofuranosidase (EC 3.2.1.55) catalyzes the hydrolysis of terminal non-reducing alpha-L-arabinofuranoside residues in alpha-L-arabinosides. Galactanase (EC 3.2.1.89), arabinogalactan endo-1,4-beta-galactosidase, catalyses the endohydrolysis of 1,4-D-galactosidic linkages in arabinogalactans.

Pectinase (EC 3.2.1.15) catalyzes the hydrolysis of 1,4-alpha-D-galactosiduronic linkages in pectate and other galacturonans.

Xyloglucanase catalyzes the hydrolysis of xyloglucan.

The term "xylanase" as used herein refers to an enzyme that is able to hydrolyze the beta-1,4 glycosyl bond in non-terminal beta-D- xylopyranosyl-1,4-beta-D-xylopyranosyl units of xylan or arabinoxylan. Other names include 1,4-beta-D-xylan xylanohydrolase, 1,4-beta-xylan xylanohydrolase, beta-1,4- xylan xylanohydrolase, (1-4)-beta-xylan 4-xylanohydrolase, endo-1,4-beta-xylanase, endo-(1-4)-beta-xylanase, endo-beta-1,4-xylanase, endo-1,4-beta-D-xylanase, endo- 1,4-xylanase, xylanase, beta-1,4-xylanase, beta-xylanase, beta-D-xylanase. Xylanases can be derived from a variety of organisms, including plant, fungal (e.g. species of Aspergillus, Penicillium, Disporotrichum, Neurospora, Fusarium, Humicola, Trichoderma) or bacterial species (e.g. species of Bacillus, Aeromonas, Streptomyces, Nocardiopsis, Thermomyces) (see for example WO92/17573, WO92/01793, WO91/19782, WO94/21785).

In one aspect of the invention, the xylanase used in the methods of the invention is an enzyme classified as EC 3.2.1.8. The official name is endo-1,4-beta-xylanase. The systematic name is 1,4-beta-D-xylan xylanohydrolase. Other names may be used, such as endo-(1-4)-beta-xylanase; (1-4)-beta-xylan 4-xylanohydrolase; endo-1,4-xylanase; xylanase; beta-1,4-xylanase; endo-1,4-xylanase; endo-beta-1,4-xylanase; endo-1,4-beta-D- xylanase; 1,4-beta-xylan xylanohydrolase; beta-xylanase; beta-1,4-xylan xylanohydrolase; endo-1,4-beta-xylanase; beta-D-xylanase. The reaction catalyzed is the endohydrolysis of 1,4-beta-D-xylosidic linkages in xylans.

In one aspect of the invention, the xylanase of the invention is a xylanase of Glycoside Hydrolyase (GH) Family 11. The term "of Glycoside Hydrolyase (GH) Family 11" means that the xylanase in question is or can be classified in the GH family 11.

In one aspect of the invention, the xylanase used according to the invention, is a xylanase having xylanase activity as measured in the "Xylanase assay" as described herein.

According to the Cazy(ModO) site, Family 11 glycoside hydrolases can be characterised as follows:

Known Activities: xylanase (EC 3.2.1.8)
Mechanism: Retaining
Catalytic Nucleophile/Base : Glu (experimental)
Catalytic Proton Donor: Glu (experimental)
3D Structure Status: Fold: β-jelly roll
Clan: GH-C

As used herein, "Clan C" refers to groupings of families which share a common three-dimensional fold and identical catalytic machinery (see, for example, Henrissat, B. and Bairoch, A., (1996) Biochem. J.,316, 695-696).

As used herein, "Family 11" refers to a family of enzymes as established by Henrissat and Bairoch (1993) Biochem J.,293,781-788 (see, also, Henrissat and Davies (1997) Current Opinion in Structural Biol. 1997, &:637-644). Common features for family 11 members include high genetic homology, a size of about 20 kDa and a double displacement catalytic mechanism (see Tenkanen et al., 1992; Wakarchuk et al., 1994). The structure of the family 11 xylanases includes two large $\beta$-sheets made of $\beta$-strands and $\alpha$- helices.

Family 11 xylanases include the following: Aspergillus niger XynA, Aspergillus kawachii XynC, Aspergillus tubigensis XynA, Bacillus circulans XynA, Bacilluspunzilus XynA, Bacillus subtilis XynA, Neocalliniastix patriciarum XynA, Streptomyces lividans XynB, Streptomyces lividans XynC, Streptomyces therinoviolaceus XynII, Thermomonospora fusca XynA, Trichoderma harzianum Xyn, Trichoderma reesei XynI, Trichoderma reesei XynII, Trichodermaviride Xyn. In the context of the present disclosure, "starch modifying enzyme", refers to any enzyme that catalyze the hydrolysis of $\alpha$-1,3 and/or $\alpha$-1,6 glucosidic linkages in glucosides. Included within this term is glycoside hydrolases typically named after the substrate that they act upon. A "starch modifying enzyme" is alpha-amylase pullulanase, isoamylase, and a beta-amylase. A starch modifying enzyme may be a starch debranching enzyme.

A starch modifying enzyme as described herein, is an enzyme having starch debranching activity as measured in the "Starch debranching activity assay" as described herein.

Starch debranching enzymes include pullulanase (EC 3.2.1.41) and Isoamylase (EC 3.2.1.68). They hydrolyse $\alpha$-l,6-D- glucosidic branch linkages in amylopectin, $\beta$-limit dextrins and pullulans. Isomylases can be distinguished from pullulanases (EC 3.2.1.41) by the inability of isoamylase to attack pullulan, and by the limited action on $\alpha$-limit dextrins.

By "amylase" is meant to include any amylase such as glucoamylases, $\alpha$-amylase, $\beta$-amylases and wild-type $\alpha$-amylases of Bacillus sp., such as B. licheniformis and B. subtilis. "Amylase" shall mean an enzyme that is, among other things, capable of catalyzing the degradation of starch. Amylases are hydrolases that cleave the $\alpha$-D-(l→4) O-glycosidic linkages in starch. Generally, $\alpha$-amylases (EC 3.2.1.1 ; (X-D-(l →4)-glucan glucanohydrolase) are defined as endo-acting enzymes cleaving $\alpha$-D-(l- »4) O-glycosidic linkages within the starch molecule in a random fashion. In contrast, the exo- acting amylolytic enzymes, such as $\beta$-amylases (EC 3.2.1.2; $\alpha$-D-(l→4)-glucan maltohydrolase) and some product-specific amylases like maltogenic $\alpha$-amylase (EC 3.2.1.133) cleave the starch molecule from the non-reducing end of the substrate, $\beta$-Amylases, $\alpha$-glucosidases (EC 3.2.1.20; $\alpha$-D-glucoside glucohydrolase), glucoamylase (EC 3.2.1.3; $\alpha$-D-(l→4)-glucan glucohydrolase), and product-specific amylases can produce glucose from starch.

By "$\alpha$-amylase variant", "$\alpha$-amylase variant polypeptide", and "variant enzyme" are meant an $\alpha$-amylase protein that has been modified by substituting amino acid residues at the amino terminus of the mature $\alpha$-amylase protein. As used herein, "parent enzymes," "parent sequence", "parent polypeptide", "wild-type $\alpha$-amylase protein", and "parent polypeptides" shall mean enzymes and polypeptides from which the $\alpha$-amylase variant polypeptides are derived. The parent enzyme may be a wild-type enzyme or an $\alpha$-amylase that had previously been recombinantly engineered. The $\alpha$-amylase variant can further include mutations in the signal sequence of the $\alpha$-amylase parent polypeptide, or elsewhere in the $\alpha$-amylase parent polypeptide. Thus, the $\alpha$-amylase polypeptide can be a recombinantly engineered enzyme.

In one aspect of the invention, the $\alpha$-amylase used according to the invention, is an $\alpha$-amylase having $\alpha$-amylase activity as measured in the $\alpha$-amylase assay" as described herein.

In one aspect of the invention, the beta-amylase used according to the invention, is a beta-amylase having beta-amylase activity as measured in the "beta-amylase assay" as described herein.

The term "pullulanase" refers to a specific kind of glucanase, an amylolytic endoenzyme that degrades pullulan. It is produced as, for example, an extracellular, cell surface-anchored lipoprotein by Gram-negative bacteria of the genus Klebsiella. Gram-positive bacteria, however, produce pullulanases as secreted proteins. Type I pullulanases specifically attack $\alpha$-1,6 linkages, while type II pullulanases are also able to hydrolyse $\alpha$-1,4 linkages. It is also produced by some other bacteria and archaea. Pullulanase is used as a detergent in biotechnology. Pullulanase (EC 3.2.1.41) is also known as pullulan-6-glucanohydrolase (debranching enzyme). Pullulan is regarded as a chain of maltotriose units linked by $\alpha$-l,6-glucosidic bonds. Pullulanase will hydrolytically cleave pullulan ($\alpha$-glucan polysaccharides).

The term "transglucosylation enzyme" refers to any enzyme having transglucosidase activity, such as trans-glucosidase. The term "transglucosidase" refers to an enzyme that transfers an $\alpha$-D-glucosyl residue in a 1,4-$\alpha$-D-glucan to the primary hydroxy group of glucose, free or combined in a 1,4-$\alpha$-D-glucan. The transglucosidase described herein has an activity described as EC 2.4.1.24, according to IUBMB enzyme nomenclature. The systematic name for the transglucosidase described herein is 1,4-$\alpha$-D-glucan:l,4-$\alpha$-D-glucan(D-glucose) 6-$\alpha$-D-glucosyltransferase. This enzyme may be referred to as $\alpha$-glucosidase in certain publications.

As noted above, the transglucosidase enzyme has an activity defined as EC 2.4.1.24, according to IUBMB enzyme nomenclature, which activity transfers glucosyl residues in certain glucans to the primary hydroxy group of glucose. In some embodiments, the enzyme may also have an activity that degrades natural gum polysaccharide (e.g., xanthan, and galactomannan-containing polysaccharides such as guar gum or lima bean gum), by clipping off sugar side chains or cleaving internal bonds to break the polysaccharide backbone. In some embodiments, the transglucosidase enzymes that find use in the present invention are commercially available (e.g., including but not limited to enzymes obtained from Megazyme, Wicklow, Ireland; or Danisco US Inc., Genencor Division, Palo Alto, CA). In some embodiments, the enzyme is an Aspergillus niger transglucosidase produced in Trichoderma reesei cells. In some additional embodiments, the transglucosidase is a wild type fungal transglucosidase (e.g., including but not limited to a fungal transglucosidase having an amino acid sequence deposited in NCBI's GENBANK® database as accession numbers: D45356 (GID:2645159; Aspergillus niger), BAD06006.1 (GID:4031328; Aspergillus awamori), BAA08125.1 {GIO:\054565; Aspergillus oryzae), XPJ)OI 210809.1 (GID: 1 15492363; Aspergillus terreus), XP _001271891.1 (GID: 121707620; Aspergillus clavatus), XPJ)01266999.1 (GID: 1 19500484; Neosartorya fischeri), XP 75181 1.1 (GID:70993928; Aspergillus fumigatus), XP_659621.1 (GID:67523121 ; Aspergillus nidulans), XP_001216899.1 (GID: 115433524; Aspergillus terreus) and XPJ)01258585.1 (GID: 119473371; Neosartorya fischeri)), or a variant thereof that has an amino acid sequence that is at least 70% identical, at least 80% identical, at least 85% identical, at least 90% identical, at least 95% identical, or at least 98% identical to a wild type fungal transglucosidase.

In one aspect of the invention, the transglucosidase used according to the invention, is a transglucosidase having transglucosidase activity as measured in the "transglucosidase assay" as described herein.

Enzyme activity assays according to the invention:

Cell wall solubilisation assay:

Preferably, bran solubility is measured using the following assay.

A suspension of wheat bran in (0.1 M) - di-sodium-hydrogen phosphate (0.2 M) buffer, pH 5.0 is prepared to an concentration of 1,33% bran (w/w). From this suspension, aliquots of 750 $\mu$l are transferred into eppendorph tubes under stirring. Each substrate tube is pre-heated for 5 minutes at 40°C. Hereto, 250 $\mu$l enzyme solution is added, making the end concentration of substrate 1%. Three dilutions (in duplicate) are made from each enzyme composition, with increasing enzyme concentration (e.g. 0,33; 1,0 and 3,0 $\mu$g enzyme/gram bran) to each time of determination (0, 30, 60 and 240 minutes). As blank, a heat denaturated solution of the enzyme composition is used. The reaction is terminated to the given times, by transferring the tubes to a incubator set at 95°C. Heat denaturated samples are kept at 4°C until all enzyme reactions are terminated. When all enzyme reactions are terminated, Eppendorph tubes are centrifuged to obtain a clear supernatant. The enzymes capability to solubilise bran is expressed as the increase in reducing end groups as determined using PAHBAH (Lever, 1972).

If the bran used contain residual starch, side activities such as amylase activity, may interfere with the above assay, bran solubilisation assay should only be carried out on purified cell wall modifying enzymes (having no amylase activity).

Alternatively the degree of solubilisation solubilisation may be measured according to the following method:

The degree of solubilisation of a plant material, e.g. cereal bran, can be determined by suspending the insoluble plant material in an extraction buffer (typically 10-25 % bran in buffer (w/w)) with and without enzymes, incubate the suspension under stirring and 40 dg C for a controlled time (e.g. 30 to 1440 minuttes). After solubilisation, the solubilised material is separated from the insoluble material by centrifugation (20 min, 25000 x g, room temp). The drymatter content in the supernatant is determined either by lyophilizing part of the sample, or by a moisture analysis (Moisture analyser, AND ML-50, Buch & Holm, Denmark). All the extraction buffer can not be recovered using this protocol, however, it is assumed that the concentraion of soluble material is the same in the recovered extraction buffer as in the not recovered extraction buffer, why a correction is made for the extraction buffer used in total. Having determined the drymatter content in the soluble fraction, knowing the amount of plant material taking into work and the amount of extraction buffer, the solubilisation degree can be determined using the following equation.

$$\text{Solubilisation degree} = (((\text{gram drymatter/ml supernatant recovered}) \times (\text{ml extraction buffer used})) \times 100\%)/\text{gram plant material taken into work}$$

Xylanase assay (Endo-$\beta$-1,4-Xylanase activity)

Samples were diluted in citric acid (0.1 M) - di-sodium-hydrogen phosphate (0.2 M) buffer, pH 5.0, to obtain approx. $OD_{590}$ = 0.7 in this assay. Three different dilutions of the sample were pre-incubated for 5 minutes at 40°C. At time = 5 minutes, 1 Xylazyme tablet (crosslinked, dyed xylan substrate, Megazyme, Bray, Ireland) was added to the enzyme solution in a reaction volume of 1ml. At time = 15 minutes the reaction was terminated by adding 10 ml of 2% TRIS/NaOH, pH 12. Blanks were prepared using 1000$\mu$l buffer instead of enzyme solution. The reaction mixture was centrifuged (1500 x g, 10 minutes, 20°C) and the OD of the supernatant was measured at 590 nm. One xylanase unit (XU) is defined as the xylanase activity increasing $OD_{590}$ with 0.025 per minute.

α -amylase activity:

α -amylases hydrolyze α -D-1,4-glucosidic linkages and its activity can be detected as a rate of color change of a starch-iodine solution due to hydrolysis of alpha 1,4-D-linkages.

Beta-amylase activity:

Beta-amylase activity can be detected as the liberation of maltose from the non-reducing end of a starch solution.

Transglucosidase activity:

Transglucosidase catalyzes both hydrolytic and transfer reactions on incubation with α -D-glucooligosaccharides. Transglucosidse activity can be detected as the formation of isomaltooligosaccharides such as isomaltose, pansose and isomaltotriose upon incubation with maltose or maltodextrin.

Starch debranching activity assay:

Enzymes specific for the α-D-1,6 glucosidic linkages in starch currently include isoamylase (EC 3.2.1.68) and pullulanases (EC 3.2.1.41). Enzymes acting on α-D-1,6 glucosidic linkages of starch are also classified by their action on pullulan and their activity is measured as the specific hydrolysis of α-D-1,6 glucosidic linkages of starch and pullulan.

As discussed above the present invention relates to a method for the solubilisation of a cereal bran comprising starch, said method comprising the steps of:

a) preparing a liquid suspension of particulate cereal bran containing starch, wherein less than 30% (w/w) of the liquid suspension of particulate cereal bran is starch or components containing starch, such as flour, and wherein the cereal bran contains at least 3% of the starch normally present in the cereal after traditional mechanical processing of the cereal, such as after commercially milling of the cereal;

b) treating said particulate cereal bran in liquid suspension sequentially in any order without the removal of any components or simultaneously with: a xylanase and a cellulase; one or more starch modifying enzyme(s) selected from the group consisting of an alpha-amylase, a pullulanase, isoamylase and a beta-amylase; and a transglucosidase having an activity defined as EC 2.4.1.24;

and wherein the solubilised cereal bran is further treated to inactivate further enzyme activity.

In some embodiments of the present invention, the particulate cereal bran is treated simultaneously with the combination of enzymes.

In some embodiments of the present invention, the starch modifying enzyme is a transglucosylation enzyme.

In some embodiments of the present invention, the one further enzyme is a Lipase, such as a phospholipase or a galacto-lipase.

In some embodiments of the present invention, the one further enzyme is a protease.

In some embodiments of the present invention, the method further comprises the step of harvesting the soluble fraction obtained from step b).

In some embodiments of the present invention, the cellulase is selected from an endo-cellulase, an exo-cellulase, a cellobiase, an oxidative cellulases, a cellulose phosphorylases

The one or more starch modifying enzyme is selected from the group consisting of an alpha-amylase, a pullulanase, isoamylase, and a beta-amylase.

The transglucosylation enzyme is selected from the group consisting of enzymes of enzyme class EC 2.4.1.24.

In some embodiments of the present invention, the average particle size of said particulate bran is below 3000 μm, such as below 1000 μm, such as below 500 μm.

In some embodiments of the present invention, the cereal bran is obtained from an industrial milling process and further milled to obtain an average particle size below 500 μm, such as below 400 μm, such as below 200 μm.

The solubilised cereal bran is further treated to inactivate further enzyme activity.

In some embodiments of the present invention, the solubilisation degree as determined on drymatter versus drymatter bran is higher than 35%, such as higher than 40%, such as higher than 50%, such as in the range of 40%-60%, such as in the range of 50%-60%.

In some embodiments of the present invention, the content of arabinoxylan oligosaccharides (AXOS) as determined on drymatter versus drymatter bran in the soluble fraction obtained from step b) is above 20 %, such as above 25%, such as above 30%, such as above 35 %, such as above 40 %, such as above 45 %, such as above 50 %.

In some embodiments of the present invention, more than 1% of the starch in the cereal bran, such as more than 2% of the starch in the cereal bran, such as more than 3% of the starch in the cereal bran, such as more than 4% of the starch in the cereal bran, such as more than 5% of the starch in the cereal bran, such as more than 10% of the starch in the cereal bran, such as more than 15-50% of the starch in the cereal bran is converted to isomaltooligosaccharide (IMO) in the soluble fraction obtained from step b).

In some embodiments of the present invention, the content of modified lipid as determined on drymatter versus drymatter bran in the soluble fraction obtained from step b) is at least 0.05 %, such as at least 1.0 %, such as in the range of 0.05- 5 %.

In some embodiments of the present invention, at least 2 %, such as at least 10 %, such as in the range of 2-80 % of total amount of modified lipid from the cereal bran is present in the soluble fraction obtained from step b).

In some embodiments of the present invention, the method further comprising a step prior to step a) of i) fractionating the cereal grain to obtain endosperm, bran, and germ; ii) separating and distributing the endosperm, bran, and germ to allow them to be treated; and iii) milling the bran.

In some embodiments of the present invention, the cereal bran is selected from wheat, barley, oat, rye and triticale, rice, and corn.

In some embodiments of the present invention, the method further comprises a step of drying the solubilised cereal bran obtained.

In some embodiments of the present invention, the method further comprises a step of spray drying the solubilised cereal bran obtained.

In some embodiments of the present invention, the method further comprises a step of lyophilisation of the solubilised cereal bran obtained.

The present invention further relates to the use of solubilised cereal bran obtained according to the present invention for the production of a food product. The solubilised cereal bran obtained in the method according to the invention may be added directly as a mixture of soluble and insoluble cereal bran material in the production of the food product.

It is to be understood that the methods according to the present invention may produce an isolated solubilised fraction with only soluble cereal bran material, such as when the soluble fraction is harvested from a mixture of soluble and insoluble cereal bran material

In some embodiments such harvested soluble cereal bran material is used in the production of food products.

In other alternative embodiments, the solubilised cereal bran containing both soluble and insoluble material may be used without further separation or harvesting directly in production of food products.

In some embodiments of the present invention, the solubilised bran produced by the method of the invention is used to produce a food product selected from the group consisting of bread, a breakfast cereal, a pasta, biscuits, cookies, snacks, and beer.

The solubilised cereal bran of the present invention may be used in the preparation of a food product. Here, the term "food product" is used in a broad sense - and covers food for humans as well as food for animals (i.e. a feed). In some aspects, the food is for human consumption.

The food may be in the form of a solution or as a solid - depending on the use and/or the mode of application and/or the mode of administration.

Accordingly, in other embodiments of the present invention harvested soluble cereal bran material and/or the solubilised cereal bran containing both soluble and insoluble material may be used in the production of animal feed.

Solubilised cereal bran may also be used as a food ingredient.

As used herein the term "food ingredient" includes a formulation which is or can be added to functional foods or foodstuffs as a nutritional supplement and/or fiber supplement. The term food ingredient as used here also refers to formulations which can be used at low levels in a wide variety of products that require gelling, texturising, stabilising, suspending, film-forming and structuring, retention of juiciness and improved mouthfeel, without adding viscosity.

The food ingredient may be in the from of a solution or as a solid - depending on the use and/or the mode of application and/or the mode of administration.

A solubilised cereal bran described herein may be - or may be added to - food supplements.

The solubilised cereal bran described herein may be - or may be added to - functional foods.

As used herein, the term "functional food" means food which is capable of providing not only a nutritional effect and/or a taste satisfaction, but is also capable of delivering a further beneficial effect to consumer.

Accordingly, functional foods are ordinary foods that have components or ingredients (such as those described herein) incorporated into them that impart to the food a specific functional - e.g. medical or physiological benefit - other than a purely nutritional effect.

Although there is no legal definition of a functional food, most of the parties with an interest in this area agree that they are foods marketed as having specific health effects.

Some functional foods are nutraceuticals. Here, the term "nutraceutical" means a food which is capable of providing not only a nutritional effect and/or a taste satisfaction, but is also capable of delivering a therapeutic (or other beneficial) effect to the consumer. Nutraceuticals cross the traditional dividing lines between foods and medicine.

Surveys have suggested that consumers place the most emphasis on functional food claims relating to heart disease. Preventing cancer is another aspect of nutrition which interests consumers a great deal, but interestingly this is the area that consumers feel they can exert least control over. In fact, according to the World Health Organization, at least 35% of cancer cases are diet-related. Furthermore claims relating to osteoporosis, gut health and obesity effects are also key factors that are likely to incite functional food purchase and drive market development.

The solubilised cereal bran described herein can be used in the preparation of food products such as one or more of: jams, marmalades, jellies, dairy products (such as milk or cheese), meat products, poultry products, fish products and bakery products.

By way of example, the solubilised cereal bran described herein can be used as ingredients to soft drinks, a fruit juice or a beverage comprising whey protein, health teas, cocoa drinks, milk drinks and lactic acid bacteria drinks, yoghurt and drinking yoghurt, cheese, ice cream, water ices and desserts, confectionery, biscuits cakes and cake mixes, snack foods, breakfast cereals, instant noodles and cup noodles, instant soups and cup soups, balanced foods and drinks, sweeteners, texture improved snack bars, fibre bars, bake stable fruit fillings, care glaze, chocolate bakery filling, cheese cake flavoured filling, fruit flavoured cake filling, cake and doughnut icing, heat stable bakery filling, instant bakery filling creams, filing for cookies, ready-to-use bakery filling, reduced calorie filling, adult nutritional beverage, acidified soy/juice beverage, aseptic/retorted chocolate drink, bar mixes, beverage powders, calcium fortified soy/plaim and chocolate milk, calcium fortified coffee beverage.

A solubilised cereal bran described herein can further be used as an ingredient in food products such as American cheese sauce, anti-caking agent for grated & shredded cheese, chip dip, cream cheese, dry blended whip topping fat free sour cream, freeze/thaw dairy whipping cream, freeze/thaw stable whipped tipping, low fat & lite natural cheddar cheese, low fat Swiss style yoghurt, aerated frozen desserts, and novelty bars, hard pack ice cream, label friendly, improved economics & indulgence of hard pack ice cream, low fat ice cream: soft serve, barbecue sauce, cheese dip sauce, cottage cheese dressing, dry mix Alfredo sauce, mix cheese sauce, dry mix tomato sauce and others.

In certain examples, the foodstuff is a beverage.

The foodstuff may be a bakery product - such as bread, Danish pastry, biscuits or cookies.

In some embodiments, the degree of bran solubilisation is measured as dry matter content (%) in soluble fraction versus bran used, as in a "Dry matter content (%) in soluble fraction assay" as described in Example 1.

In some embodiments, the degree of bran solubilisation as measured in a "Dry matter content (%) in soluble fraction assay" is higher than 35%, such as higher than 35%, such as higher than 40%, such as higher than 50%, such as in the range of 40%-60%, such as in the range of 50%-60%.

EXAMPLES

EXAMPLE 1

**L.abscale Solubilisation of Commercial wheat bran:**

Bran:

Wheat bran fractions obtained from a commercial mill was used. The fractions consisted of a fine bran fraction and a course bran fraction. Before use, the course bran fraction was milled to optains a smaller particle size, which will increase the specific surface of the bran, evantually increase the efficiency of the enzymatic solubilisation of the bran. The milling was conducted on a Retch mill to obtain an average particle size of 500 $\mu$m. However, it should be noted that a smaller particle size might be preferable, regarding the degree of solubilisation.

Enzymes:

*Table 1. Enzymes used for wheat bran solubilisation*

| Enzyme Activity | Enzyme ID |
| --- | --- |
| Xylanase | Bacterial xylanase, DIDK 0218 (BS4 #158) |
| Cellulase/glucanase | Genencor GC220 JWS #050808 |
| Amylase | Genencor, Spezyme Fred (4016101001) |
| Pullulanase | Genencor Optimax L-1000 (401-05349-002) |
| Beta-amylase | Genencor Optimalt BBA (EDS 221) |

(continued)

| Enzyme Activity | Enzyme ID |
|---|---|
| Transglucosidase | Genencor TGL-500 (1600675782) |

Protocol:

*Table 2. Protocol used for bran solubilisation*

Wheat bran is suspended in 50mM NaPi, pH 5 (20% w/w) in a container/reactor with closed lid

The Bran suspention is heated to 100 dg C under stirring, and boiled for 2 min

Sample is placed under stirring (with closed lid) at 50 dg C and left to equilibrate in regard to temp

Enzymes are added and reaction is continued @ 50 dg C for 24h (Temp and time may be further optimised)

Supernatant is separated from residual solids

Supernatant is boiled to inactivate further enzyme activity

Sample cooled and stored to avoid contamination

Pellet is freeze dried

Supernatant is analysed

Analysis:

The soluble bran fraction (the supernatant) is analysed in regard to:

Dry matter content (%) in soluble fraction assay:

A quantitative sample of the soluble bran obtained is lyophilised. After lyophilisation, the sample size is quantified again and the amount of drymatter is calculated. As a blank, the buffer is included in this analysis.

Trials:

*Table 3. Trials conducted resulting in different treatments of wheat bran*

| | | | | **gram enzyme sample/10g bran** | | | | |
|---|---|---|---|---|---|---|---|---|
| **Trial** | **Bran, g** | **Buffer, g** | **Xylanase** | **GC220** | **Amylase** | **Pullulanase** | **Beta-amylase** | **Transglucosidase** |
| 1 | 10 | 30 | 0 | 0 | 0 | 0 | 0 | 0 |
| 2 | 10 | 28,81579 | 1,184211 | 0 | 0 | 0 | 0 | 0 |
| 3 | 10 | 29,5 | 0 | 0,5 | 0 | 0 | 0 | 0 |
| 4 | 10 | 28,31579 | 1,184211 | 0,5 | 0 | 0 | 0 | 0 |
| 5 | 10 | 29,58 | 0 | 0 | 0,4 | 0,01 | 0,01 | 0,05 |
| 6 | 10 | 27,89579 | 1,184211 | 0,5 | 0,4 | 0,01 | 0,01 | 0,05 |

**Results:**

Bran solubilisation degree:

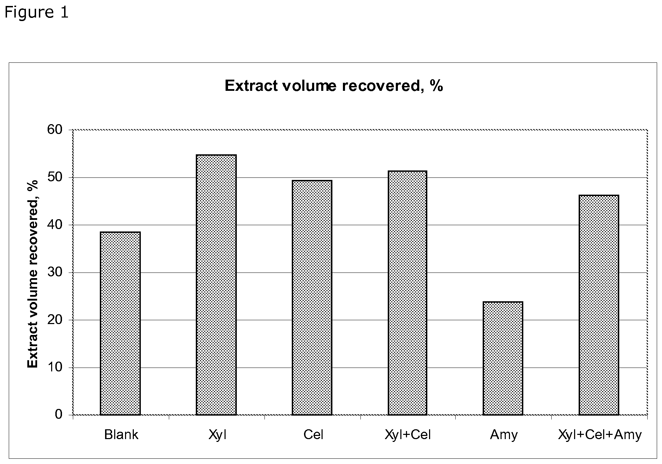

Due to the well-known water holding capacity of the cell-wall component in the bran fraction, an efficient recovery of the extraction buffer was not obtained in these experiments. However, could be if a proper process was developed. In fig. 1 the actual recovery of the extraction buffer is shown. The extraction recovery varies from 25 to 55%.

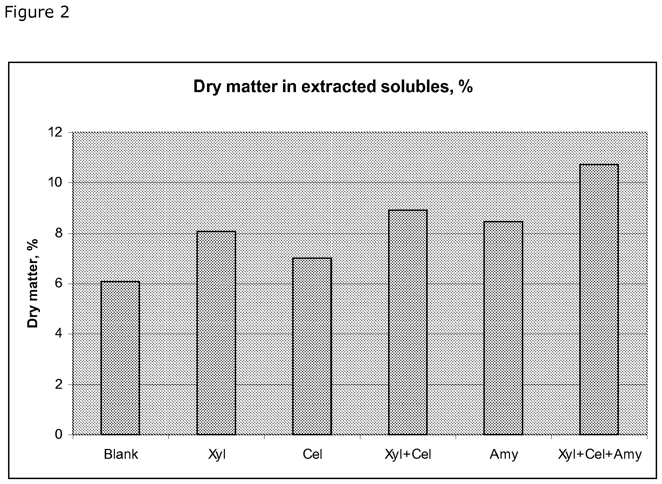

The efficiency of the solubilisation was measured based on the dry matter content in the soluble fraction obtained. As can be seen from figure 2, the wet process alone solubilises a significant amount of the bran. However, the combined effect of xylanases, cellulases/glucanases and the amylolytic complex increases the solubilisation significantly. It should be noted that there in this experiment actually is a additive effect of combining the Non-starch hydrolysing enzymes (xylanase, cellulase and glucanase) with the starch hydrolysing enzymes (Amylase, pullulanase, beta-amylase and trans-glucosidase). The additive effect might be obtained due to the fact that there might be a steric hindrance for the single enzyme complexes to obtain access to their substrate. This steric hindrance or access to the substrate is optimised when using both the non-starch - and starch modifying enzymes in combination.

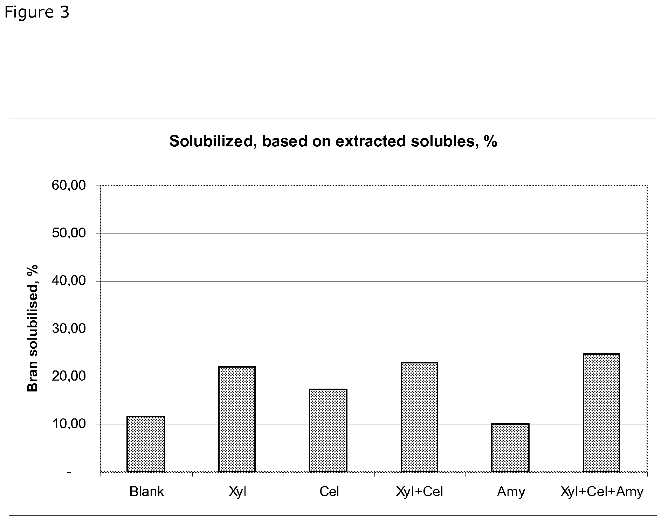

Based on the dry matter content in the various soluble fractions obtained and the amount of extraction buffer recovered, it is possible to determine a degree of solubilisation. The degree of solubilisation of the bran fraction varies from 10 to 25% solubilisation. The data is illustrated in figure 3.

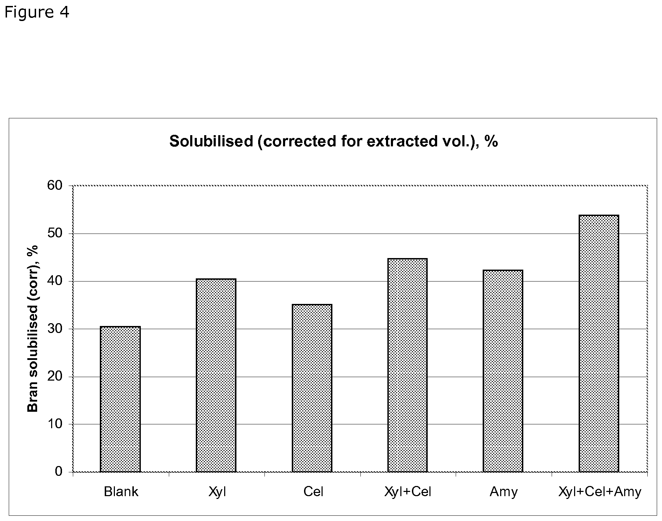

However, the solubilisation degree in figure 3 is not the exact solubilisation degree. The exact solubilisation degree is significantly higher. The reason for this deviation and low recovery of the extraction buffer as a function of bran treatment. However, the real extraction degree can easily be obtained, by correcting the extraction buffer obtained with the extraction buffer volume actually used. This correction is acceptable. Since the concentration of the solubles in the recovered solubles is assumed to be the same as the concentration in the not recovered solubles. Furthermore, the recovery of solubles obtained here, is given by the process used in this protocol. A higher recovery could easily be obtained using a different separation process or using repeating extractions of the residual bran. When the data regarding bran solubilisation is corrected, the results in fig 4 are obtained.

EXAMPLE 2

***Labscale Solubilisation of Commercial wheat bran:***

Bran:

A larger scale experiment was prepared by applying 500 g wheat bran, 3300 ml 50 mM NaPi pH 5.0 and the enzymes listed in Table 4. The reaction was carried out according to the protocol given in Table 2.

Enzymes:

Table 4: Enzymes applied in large scale solubilization experiment

| Enzyme Activity | Enzyme ID | Amount/g |
|---|---|---|
| Xylanase | Bacterial xylanase, DIDK 0218 (BS4 #158) | 59 |
| Cellulase/glucanase | Genencor GC220 JWS #050808 | 2.5 |
| Amylase | Genencor, Spezyme Fred (4016101001) | 2 |
| Pullulanase | Genencor Optimax L-1000 (401-05349-002) | 0.5 |
| Beta-amylase | Genencor Optimalt BBA (EDS 221) | 0.5 |

Analysis:

AX content:

Samples of solubles (supernatants) were analysed for solubilised AX. Analysis was made according to Rouau and Surget (1994).

AX mw/AXOS analysis:

Molecular weight of AX was determined by LC_MS.

Starch content:

The starch content in the bran and solubilised bran, was analysed by glucose determinations after total hydrolysis of starch using a thermostable alpha amylase at 95 dg C for 90 minuttes, followed by addition of pullanase and glucoamylase at 50 dg C for 45 hours.

IMO content:

The IMO concentration in the soluble fraction obtained was determined using HPLC-Anion Exchange Chromatography.

## Results:

Bran solubilisation degree:

When correcting for the exact volume of extraction buffer used in this experiment we obtained a degree of solubilization of 54%, which is comparable to that obtained in the previous experiment.

AX content:

The amount of AX in the bran fraction was determined to 19 mg/ml supernatant. Taking the extraction volume in account, the total amount of soluble AX in the solubilised bran is 62,7 g. According to literature data on AX content in wheat bran, we obtain approx. 53% solubilisation of the total AX. Data are summerised in table 5.

Table 5. Bran taken into work, g. Extraction buffer used and volume, ml. AX concentration in solubilised bran, mg/ml. Total AX when corrected for extraction volume, g. Extracted AX relative to bran, %. Literature data for AX content in wheat bran and finally, Extraction degree of bran, %.

| | |
|---|---|
| Bran, g | 500 |
| Buffer, NaPi, pH 5, ml | 3300 |
| AX in supernatant, mg/ml | 19 |
| AX in total, g | 62,7 |
| Extracted AX of total bran, % | 12,54 |
| Teoretical AX in bran, %* | 23,8 |
| AX sol of total AX in bran, % | 52,69 |

Starch content:

The amount of starch in the bran starting material was determined to 16.3% following enzymatic analysis of the total glucose content. The amount of starch from the bran which is recovered and found in the solubilized material was determined to 76% as analyzed by total glucose measurements of the solubilized material.

IMO content:

The supernatant was analyzed for content of isomaltooligosaccharides (isomaltose, isomaltotriose and panose) using High performance anion exchange chromatography, Table 5. The concentration of IMO obtained in a solubilization process depends largely on the starch content of the bran material. The degree of conversion of starch in the bran starting material to IMO is used as a measure of the IMO production. In this example the total concentration of IMO (isomaltose, isomaltotriose and panose) is measured to 2690 ppm in the solubilized material (Table 6). When taking the buffer volume into account the amount of IMO generated is 9.0 g. Hence the total conversion into IMO was 11.0% of the initial amount of starch in the bran.

Table 6: Concentration of isomaltooligosaccharides

| | Isomaltose | Isomaltotriose | panose |
|---|---|---|---|
| Concentration, ppm | 2200 | 470 | 20 |

AXOS analysis by MS:

Results from AXOS analysis showed a DP destibution of the AXOS in the range of DP 3 to DP 11, with peak concentration of DP 6.

EXAMPLE 3

***Baking experiment using solibilised bran.***

Flour:

Commercial un-optimised Danish reform flour (2007-00113) is used for the baking experiment. As a control to the solubilised bran, reconstituted flour is made from the flour and the bran used for the solubilisation experiments (see example 1 and 2). Based on the drymatter in the solubilised bran fraction and the amount of water/soluble bran added to the flour, the amount of bran substituted with flour can be calculated (see table 8).

Solubilised bran:

The solubilised bran obtained in Example 2 was used for the baking trials.

Baking recipe:

The baking performance of the flour, flour added solubilised bran and the reconstituted flour added unsolubilised bran was evaluated in small scale baking trials (50 gram mixer and 10 gram loaves) using the below recipe (table 7).

*Table* 7. *Recipe used for evaluating the baking performance* of flour, flour added solubilised bran and the reconstituted flour added unsolubilised bran. *Salt/sugar is a 1:1 (w/w) mixture of salt and sugar. Water is the water absorption determined by Farinograph analysis.*

| Ingredients | Mini skala |
|---|---|
| | ml or g |
| Flour | 26.5 |
| Dry yeast | 1 |
| Salt/Sugar | 1.6 |
| Water | 400BU -2% |

***Dough making and baking***

The flour (or mix of flour and bran) and dry ingredients are mixed for one minute, hereafter water was added and mixing was continued for another five minutes.

After mixing, four dough lumps were weighed out, each containing 10 gram flour. These were moulded into bread using a hand moulder. Loaves were put into baking pans and placed in a sealed container (with a lid) and left on the table for 10 minutes. Hereafter, bread is proofed at 34°C 85% RH for 45 minutes and finally baked at 230°C for five minutes in a Bago oven (Bago-line, Fåborg, Denmark). During scaling of the dough, the stickiness was subjectively evaluated on a scale from 1 (very sticky) to 5 (dry).

The bread was cooled for 20 minutes before evaluation (weighing, volume measurement, and crumb, crust and sensoric evaluation).

***Baking trials***

The below baking trials were conducted (table 8).

Table 8. Baking trial experimental setup. ID refers to flour composition either added solubilised bran or reconstituted with insoluble bran. Flour (g) is the amount of flour flour in the bread. Bran (g) is the amount of bran used for reconstitution. Sol. Bran (ml) is the amount of solubilised bran added to the flour instead of water. Water (ml) is the amount of water added to the flour. "Bran" (%) is the amount of bran, either solubilised or as insoluble bran based on flour weight.

| Bagning | ID | Flour, g | Bran, g | Sol. Bran, g | Water, ml | "Bran", % in flour |
|---|---|---|---|---|---|---|
| 1 | Blank | 50 | 0 | 0 | 28,50 | - |

(continued)

| Bagning | ID | Flour, g | Bran, g | Sol. Bran, g | Water, ml | "Bran", % in flour |
|---|---|---|---|---|---|---|
| 2 | Sol bran 2,5% | 50 | 0 | 14,25 | 14,25 | 2,57 |
| 3 | Sol bran 5,0% | 50 | 0 | 28,50 | - | 5,13 |
| 4 | 5,0% Bran | 43,75 | 2,5 | - | 28,50 | 5,00 |

<u>Sonsoric evaluation:</u>

Bread was sensoric evaluated after 20 minutes of cooling. Especially the bitter taste from the traditional bran fraction was evaluated.

<u>Staling evaluation:</u>

The firmness was evaluated subjectively after leaving the bread loafs 24 hour on the lab table.

## <u>Results:</u>

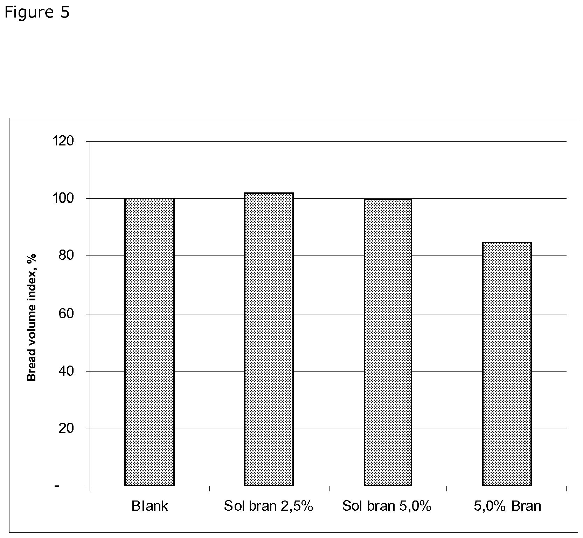

As can be seen in table 9 and figure 5, the addition of the soluble fibers has no effect on the specific volume of the bread.

*Tab. 9. Baking trial results. ID refers to flour composition, either added solubilised bran or reconstituted with insoluble bran. Flour (g) is the amount of flour flour in the bread. Bran (g) is the amount of bran used for reconstitution. Spec. Vol. (mg/ml) is the absolute specific volumen of the breads. Rel vol vs blank (%) is the relative volume of the breads versus bread 1 (blank)*

| Baking | ID | Spec. Vol, ml/g | Rel vol vs blank, % |
|---|---|---|---|
| 1 | Blank | 3,41 | **100** |
| 2 | Sol bran 2,5% | 3,48 | **102** |
| 3 | Sol bran 5,0% | 3,40 | **100** |
| 4 | 5,0% Bran | 2,88 | **85** |

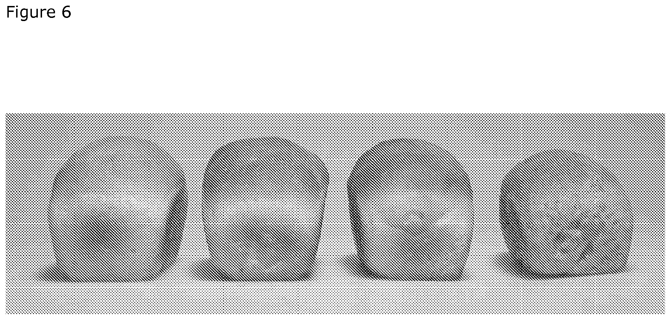

However, even more surprisingly, the addition of the soluble fibers to the bread had no effect on the color of the resulting bread compared to addition of fibers. See figure 6.

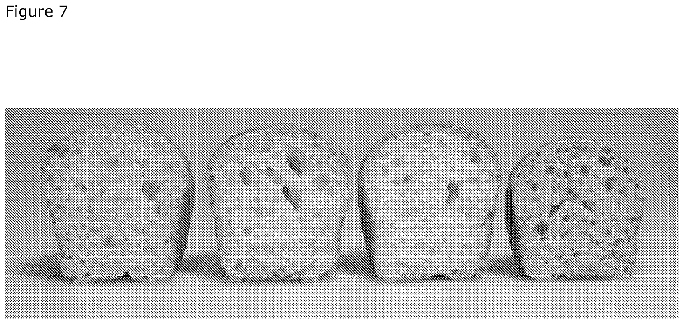

The results related to color is even more pronounced when the bread crumb is evaluated, see figure 7.

<u>Sensoric evaluation:</u>

Bread was evaluated of a test panel (n=3). The below evaluation, showed that no significant differences in the sensoric properties could be determined between the control bread and the bread added soluble bran fraction. Whereas the bread added bran had a characteristic bitter taste from the bran.

*Table 10. Sensoric evaluation of bread. ID refers to flour composition, either added solubilised bran or reconstituted with insoluble bran. Bitter taste is evaluated with flour and insoluble bran added bread as reference. Difference from control, refers to overall appearance compared to bread 1. Crust color and crumb color is evaluated subjectively (see fig 6 and 7).*

| Baking | ID | Bitter taste | Difference from control | Crust color | Crumb color |
|---|---|---|---|---|---|
| 1 | Blank | none | none | golden | white |
| 2 | Sol bran 2,5% | none | none | darker golden | white |
| 3 | Sol bran 5,0% | none | none | darker golden | white |

(continued)

| Baking | ID | Bitter taste | Difference from control | Crust color | Crumb color |
|---|---|---|---|---|---|
| 4 | 5,0% Bran | yes | yes | darker golden, with fibers imbedded | brown |

*Table 11. Firmness evaluation of bread. ID refers to flour composition, either added solubilised bran or reconstituted with insoluble bran. Firmness is evaluated on cut bread left 24 hours on the lab bench. Scale: 1 = soft; 5 = firm.*

| Baking | | ID | Firmness |
|---|---|---|---|
| | 1 | Blank | 4 |
| | 2 | Sol bran 2,5% | 3,5 |
| | 3 | Sol bran 5,0% | 3 |
| | 4 | 5,0% Bran | 5 |

**Claims**

1. A method for the solubilisation of a cereal bran comprising starch, said method comprising the steps of:

    a) preparing a liquid suspension of particulate cereal bran containing starch, wherein less than 30% (w/w) of the liquid suspension of particulate cereal bran is starch or components containing starch, such as flour, and wherein the cereal bran contains at least 3% of the starch normally present in the cereal after traditional mechanical processing of the cereal, such as after commercially milling of the cereal;
    b) treating said particulate cereal bran in liquid suspension sequentially in any order without the removal of any components or simultaneously with: a xylanase and a cellulase; one or more starch modifying enzyme(s) selected from the group consisting of an alpha-amylase, a pullulanase, isoamylase and a beta-amylase; and a transglucosidase having an activity defined as EC 2.4.1.24;

    and wherein the solubilised cereal bran is further treated to inactivate further enzyme activity.

2. The method according to claim 1, wherein in part b) said particulate cereal bran in liquid suspension is treated with one or more further enzyme(s) selected from one or more of a lipase, such as a phospholipase or a galacto-lipase, and a protease.

3. The method according to claim 1 or claim 2, wherein the average particle size of said particulate bran is below 3000 $\mu$m, such as below 1000 $\mu$m, such as below 500 $\mu$m.

4. The method according to any one of claims 1-3, wherein said cereal bran is obtained from an industrial milling process and further milled to obtain an average particle size below 500 $\mu$m, such as below 400 $\mu$m, such as below 200 $\mu$m.

5. The method according to any one of claims 1-4, wherein the solubilisation degree as determined on drymatter versus drymatter bran is higher than 35%, such as higher than 40%, such as higher than 50%, such as in the range of 40%-60%, such as in the range of 50%-60% , wherein the degree of solubilisation can be determined by:

    suspending the bran in an extraction buffer, typically 10-25 % bran in buffer (w/w) with and without enzymes;
    incubating the suspension, typically with stirring and at 40°C for a controlled time typically 30 to 1440 minutes;
    the solubilised material is then separated from the insoluble material by centrifugation;
    the drymatter content in the supernatant is determined either by lyophilizing part of the sample, or by a moisture analysis;
    the solubilisation degree can be determined using the following equation:

$$\text{solubilisation degree} = (((\text{gram drymatter/ml supernatant recovered}) \times (\text{ml extraction buffer used})) \times 100\%)/\text{gram bran}.$$

**6.** The method according to any one of claims 1-5, wherein more than 1% of the starch in the cereal bran, such as more than 2% of the starch in the cereal bran, such as more than 3% of the starch in the cereal bran, such as more than 4% of the starch in the cereal bran, such as more than 5% of the starch in the cereal bran, such as more than 10% of the starch in the cereal bran, such as more than 15-50% of the starch in the cereal bran is converted to isomaltooligosaccharide (IMO) in the soluble fraction obtained from step b).

**7.** Use of a solubilised cereal bran produced by a method according to any one of claims 1-6 for the production of a food product.

**Patentansprüche**

**1.** Verfahren zur Solubilisierung einer Getreidekleie, die Stärke umfasst, wobei das Verfahren die Schritte umfasst des:

a) Herstellens einer Flüssigkeitssuspension aus teilchenförmiger Getreidekleie, die Stärke enthält, wobei weniger als 30 % (Gew./Gew.) der Flüssigkeitssuspension von teilchenförmiger Getreidekleie aus Stärke oder Komponenten, die Stärke enthalten, wie Mehl, bestehen, und wobei die Getreidekleie mindestens 3 % der Stärke, die normalerweise in dem Getreide nach herkömmlichem mechanischem Verarbeiten des Getreides, wie beispielsweise nach kommerziellem Mahlen des Getreides, vorliegt, enthält;

b) Behandelns der teilchenförmigen Getreidekleie in Flüssigkeitssuspension nacheinander in irgendeiner Reihenfolge ohne Entfernen irgendwelcher Komponenten oder gleichzeitig mit: einer Xylanase und einer Cellulase; einem oder mehreren stärkemodifizierenden Enzym(en) ausgewählt aus der Gruppe bestehend aus einer Alpha-Amylase, einer Pullulanase, Isoamylase und einer Beta-Amylase; und einer Transglucosidase, die eine Aktivität aufweist, die als EC 2.4.1.24 definiert wird;

und wobei die solubilisierte Getreidekleie ferner zum Inaktivieren einer weiteren Enzymaktivität behandelt wird.

**2.** Verfahren nach Anspruch 1, wobei in Teil b) die teilchenförmige Getreidekleie in Flüssigkeitssuspension mit einem oder mehreren weiteren Enzymen(en) behandelt wird, ausgewählt unter einer oder mehreren von einer Lipase, wie beispielsweise einer Phospholipase oder einer Galactolipase, und einer Protease.

**3.** Verfahren nach Anspruch 1 oder Anspruch 2, wobei die durchschnittliche Teilchengröße der teilchenförmigen Kleie geringer als 3000 $\mu$m, wie beispielsweise geringer als 1000 $\mu$m, wie beispielsweise geringer als 500 $\mu$m ist.

**4.** Verfahren nach einem der Ansprüche 1 - 3, wobei die Getreidekleie aus einem industriellen Mahlvorgang erhalten und noch weiter gemahlen wird, um eine durchschnittliche Teilchengröße geringer als 500 $\mu$m, wie beispielsweise geringer als 400 $\mu$m, wie beispielsweise geringer als 200 $\mu$m, zu erhalten.

**5.** Verfahren nach einem der Ansprüche 1 - 4, wobei der Solubilisierungsgrad, wie an der Feststoffsubstanz im Vergleich mit der Feststoffsubstanzkleie bestimmt, höher als 35 %, wie beispielsweise höher als 40 %, wie beispielsweise höher als 50 % ist, wie beispielsweise im Bereich von 40 % - 60 %, wie beispielsweise im Bereich von 50 % - 60 % liegt, wobei der Solubilisierungsgrad bestimmt werden kann durch:

Suspendieren der Kleie in einem Extraktionspuffer, typischerweise 10 - 25 % der Kleie in Puffer (Gew./Gew.) mit und ohne Enzyme;
Inkubieren der Suspension, typischerweise unter Rühren und bei 40 °C für eine eingestellte Zeit von typischerweise 40 bis 1440 Minuten;
wobei das solubilisierte Material dann von dem unlöslichen Material durch Zentrifugieren getrennt wird;
der Trockensubstanzgehalt im Überstand entweder durch Lyophilisieren eines Teils der Probe oder durch Feuchtigkeitsanalyse bestimmt wird;
der Solubilisierungsgrad unter Anwendung der folgenden Gleichung bestimmt werden kann:

$$\text{Solubilisierungsgrad} = (((\text{Gramm Trockensubstanz/ml gewonnener Überstand}) \times (\text{ml verwendeter Extraktionspuffer})) \times 100\ \%)/\text{Gramm Kleie}.$$

**6.** Verfahren nach einem der Ansprüche 1 - 5, wobei mehr als 1 % der Stärke in der Getreidekleie, wie beispielsweise mehr als 2 % der Stärke in der Getreidekleie, wie beispielsweise mehr als 3 % der Stärke in der Getreidekleie, wie beispielsweise mehr als 4 % der Stärke in der Getreidekleie, wie beispielsweise mehr als 5 % der Stärke in der Getreidekleie, wie beispielsweise mehr als 10 % der Stärke in der Getreidekleie, wie beispielsweise mehr als 15 - 50 % der Stärke in der Getreidekleie in Isomaltoligosaccharid (IMO) in der löslichen Fraktion, die aus Schritt b) erhalten worden ist, umgewandelt werden.

**7.** Verwendung einer solubilisierten Getreidekleie, die durch ein Verfahren nach einem der Ansprüche 1 - 6 hergestellt wird, zur Herstellung eines Nahrung smittelprodukts.

## Revendications

**1.** Procédé de solubilisation de son de céréale comprenant de l'amidon, ledit procédé comprenant les étapes de:

a) préparation d'une suspension liquide de son de céréale sous forme de particules contenant de l'amidon, moins de 30 % (en pds/pds) de la suspension liquide du son de céréale sous forme de particules étant de l'amidon ou des composants contenant de l'amidon, tels que de la farine, et le son de céréale contenant au moins 3 % de l'amidon normalement présent dans la céréale après le traitement mécanique traditionnel de la céréale, tel qu'après le broyage de manière commerciale de la céréale;
b) traitement dudit son de céréale sous forme de particules en suspension liquide séquentiellement en n'importe quel ordre sans l'élimination de quelconques composants ou simultanément avec: une xylanase et une cellulase; une ou plusieurs enzyme(s) de modification de l'amidon sélectionnées dans le groupe constitué d'une alpha-amylase, d'une pullulanase, isoamylase et d'une bêta-amylase; et d'une transglucosidase ayant une activité définie comme EC 2.4.1.24;

et le son de céréale solubilisé est en outre traité pour inactiver de manière supplémentaire l'activité enzymatique.

**2.** Procédé selon la revendication 1, dans lequel dans la partie b) ledit son de céréale sous forme de particules en suspension liquide est traité avec une ou plusieurs enzyme(s) supplémentaires sélectionnées parmi une ou plusieurs d'une lipase, telle qu'une phospholipase ou une galacto-lipase, et une protéase.

**3.** Procédé selon la revendication 1 ou la revendication 2, dans lequel la taille moyenne de particule dudit son sous forme de particules est inférieure à 3 000 $\mu$m, telle qu'inférieure à 1 000 $\mu$m, telle qu'inférieure à 500 $\mu$m.

**4.** Procédé selon l'une quelconque des revendications 1 à 3, dans lequel ledit son de céréale est obtenu à partir d'un procédé de broyage industriel et en outre broyé pour obtenir une taille moyenne de particule inférieure à 500 $\mu$m, telle qu'inférieure à 400 $\mu$m, telle qu'inférieure à 200 $\mu$m.

**5.** Procédé selon l'une quelconque des revendications 1 à 4, dans lequel le degré de solubilisation tel que déterminé sur la matière sèche *versus* le son de matière sèche est supérieur à 35 %, tel que supérieur à 40 %, tel que supérieur à 50 %, tel que situé dans la plage de 40 % à 60 %, tel que situé dans la plage de 50 % à 60 %, le degré de solubilisation pouvant être déterminé par:

la mise en suspension du son dans un tampon d'extraction, typiquement de 10 à 25 % de son dans le tampon (en pds/pds) avec et sans enzymes;
l'incubation de la suspension, typiquement sous agitation et à 40°C sur une durée contrôlée typiquement de 30 à 1 440 minutes;
le matériau solubilisé étant ensuite séparé du matériau insoluble par centrifugation;
la teneur en matière sèche dans le surnageant étant déterminée soit par lyophilisation d'une partie de l'échantillon, soit par analyse de l'humidité;
le degré de solubilisation pouvant être déterminé en utilisant l'équation suivante:

$$\text{degré de solubilisation} = (((\text{gramme de matière sèche/surnageant récupéré en ml}) \times (\text{tampon d'extraction utilisé en ml})) \times 100\%)/\text{son en gramme}.$$

**6.** Procédé selon l'une quelconque des revendications 1 à 5, dans lequel plus de 1 % de l'amidon dans le son de céréale, tel que plus de 2 % de l'amidon dans le son de céréale, tel que plus de 3 % de l'amidon dans le son de céréale, tel que plus de 4 % de l'amidon dans le son de céréale, tel que plus de 5 % de l'amidon dans le son de céréale, tel que plus de 10 % de l'amidon dans le son de céréale, tel que plus de 15 à 50 % de l'amidon dans le son de céréale est converti en isomalto-oligosaccharide (IMO) dans la fraction soluble obtenue à partir de l'étape b).

7. Utilisation de son de céréale solubilisé produit selon un procédé selon l'une quelconque des revendications 1 à 6 pour la production d'un produit alimentaire.

Figure 1

Figure 2

Figure 3

Figure 4

**Solubilised (corrected for extracted vol.), %**

Figure 5

Figure 6

Figure 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008000050 A
- WO 2008087167 A
- FR 2884390
- US 20050089602 A
- US 941251 P
- WO 2005074656 A
- US 832511 P
- EP 562003 A
- WO 02095014 A
- WO 9217573 A
- WO 9201793 A
- WO 9119782 A
- WO 9421785 A

**Non-patent literature cited in the description**

- **KATAPODIS P et al.** *European journal of Nutrition,* January 2003, vol. 42 (1), 55-60
- **YUAN et al.** *Food Chemistry,* 2006, vol. 95 (3), 484-492
- **COURTIN.** *Journal of the science of food and agriculture,* 2008, vol. 88, 2517-2522
- **CLOETENS et al.** *Journal of the American College of Nutrition,* 2008, vol. 27 (4), 512-518
- **SWENNEN et al.** *Journal of the science of food and agriculture,* 2006, vol. 86, 1722-1731
- **ROUAU, X ; SURGET, A.** *Carbohydrate polymers,* 1994, vol. 24, 123-132
- **KATINA et al.** *LWT - Food Science and Technology,* 2006, vol. 39 (5), 479-491
- **LAURIKAINEN et al.** *J Sci Food Agric,* 1998, vol. 76, 239-249
- Cellulose-binding domains: classification and properties. **TOMME et al.** Enzymatic Degradation of Insoluble Polysaccharides. American Chemical Society, 1995, 142-163
- *Pure and Appl. Chem.,* 1987, vol. 59, 257-268
- **LEVER et al.** *Anal. Biochem.,* 1972, vol. 47, 273-279
- **TILBEURGH et al.** *FEBS Letters,* 1982, vol. 149, 152-156
- **VAN TILBEURGH ; CLAEYSSENS.** *FEBS Letters,* 1985, vol. 187, 283-288
- **VENTURI et al.** *J. Basic Microbiol.,* 2002, vol. 42, 55-66
- *J. Appl.,* 1981, vol. 3, 157-163
- **HENRISSAT, B. ; BAIROCH, A.** *Biochem. J.,* 1996, vol. 316, 695-696
- **HENRISSAT ; BAIROCH.** *Biochem J.,* 1993, vol. 293, 781-788
- **HENRISSAT ; DAVIES.** *Current Opinion in Structural Biol.,* 1997, 637-644